Europäisches Patentamt

European Patent Office

Office européen des brevets

(11) Veröffentlichungsnummer : **0 216 258**
**B1**

(12) **EUROPÄISCHE PATENTSCHRIFT**

(45) Veröffentlichungstag der Patentschrift :
**09.11.88**

(21) Anmeldenummer : **86112551.6**

(22) Anmeldetag : **10.09.86**

(51) Int. Cl.⁴ : **B 01 D 53/14, C 10 K 1/16**

(54) **Verfahren zur Reinigung von Gasen.**

(30) Priorität : **14.09.85 DE 3532955**

(43) Veröffentlichungstag der Anmeldung :
**01.04.87 Patentblatt 87/14**

(45) Bekanntmachung des Hinweises auf die Patenterteilung : **09.11.88 Patentblatt 88/45**

(84) Benannte Vertragsstaaten :
**AT BE CH DE FR GB IT LI LU NL SE**

(56) Entgegenhaltungen :
**DE-A- 1 794 060**
**NL-A- 6 505 187**
**NL-A- 7 103 928**

(73) Patentinhaber : **HOECHST AKTIENGESELLSCHAFT**
**Postfach 80 03 20**
**D-6230 Frankfurt am Main 80 (DE)**

(72) Erfinder : **Konkol, Werner, Dr. Dipl.-Chem.**
**Lützowstrasse 40a**
**D-4200 Oberhausen 11 (DE)**
Erfinder : **Bahrmann, Helmut, Dr.Dipl.-Chem.**
**Rohstrasse 48**
**D-4236 Hamminkeln-Brünen (DE)**
Erfinder : **Dämbkes, Georg, Dr.Dipl.-Chem.**
**Nibelungenstrasse 65**
**D-4220 Dinslaken (DE)**
Erfinder : **Gick, Wilhelm, Dr. Dipl.-Chem.**
**Im Buschhuck 8**
**D-4100 Duisburg 74 (DE)**
Erfinder : **Wiebus, Ernst**
**Ferdinandstrasse 77**
**D-4200 Oberhausen 14 (DE)**
Erfinder : **Bach, Hanswilhelm, Dr.Dipl.-Chem.**
**Alleestrasse 56**
**D-4100 Duisburg 11 (DE)**

## Beschreibung

Die vorliegende Erfindung betrifft ein Verfahren zur Reinigung von Gasen, die Schwefelwasserstoff und/oder Cyanwasserstoff und/oder Kohlenoxidsulfid (Carbonylsulfid) enthalten. Die Gasreinigung erfolgt durch eine Wäsche mit gesättigten, geradkettigen oder verzweigten aliphatischen Aldehyden. Die neue Arbeitsweise eignet sich zur Reinigung aller Gase, die unter den Arbeitsbedingungen indifferent gegenüber Aldehyden sind. Sie hat sich besonders zur Entfernung der genannten Verunreinigungen aus Wasserstoff, Kohlenmonoxid und Gemischen dieser beiden Verbindungen, vor allem Synthesegas, bewährt.

Synthesegas enthält Kohlenmonoxid und Wasserstoff zumeist in äquimolaren oder annähernd äquimolaren Mengen, selten in davon abweichenden Verhältnissen. Es wird in großem Umfang in zahlreichen technisch ausgeübten Verfahren angewandt. So ist Synthesegas der Rohstoff für die Erzeugung von Methanol, von Kohlenwasserstoffen nach Fischer-Tropsch und von Aldehyden durch Hydroformylierung von Olefinen. Ferner wird es zur Herstellung von Methan, Ethanol und Essigsäure eingesetzt und zur Homologisierung von Alkoholen, d. h. der Verlängerung der Kohlenstoffatomkette um ein $CH_2$-Glied zu dem nächst höheren Alkohol der homologen Reihe benutzt.

In zunehmendem Maße finden für diese Synthesen hochaktive Katalysatoren Anwendung. So haben z. B. Kupferkatalysatoren bei der Herstellung von Methanol und Rhodiumkatalysatoren bei der Hydroformylierung, der Homologisierung und der Ethanolherstellung Eingang gefunden. Diese Katalysatoren sind überaus empfindlich gegen die Einwirkung verschiedenster Gifte, unter denen Schwefelwasserstoff, Cyanwasserstoff und Kohlenoxidsulfid besondere Bedeutung haben. Es ist daher erforderlich, solche Verunreinigungen soweit wie möglich zu entfernen, um eine vorzeitige Desaktivierung der Katalysatoren zu vermeiden.

Je nach Art des zu seiner Erzeugung verwendeten Ausgangsmaterials — schweres Heizöl, Erdgas, Steinkohle oder Braunkohle — enthält Synthesegas in unterschiedlich hoher Konzentration eine Vielzahl von Verunreinigungen. Hierzu gehören insbesondere Schwefelverbindungen, wie Schwefelwasserstoff, Kohlenoxidsulfid, Schwefelkohlenstoff, Mercaptane und Schwefeldioxid. Daneben finden sich Chlorwasserstoff und Cyanwasserstoff. Besonders stark verunreinigt ist aus Kohle hergestelltes Synthesegas, geringer ist die Konzentration der Verunreinigungen im Synthesegas, das aus Erdöl oder Erdgas gewonnen wird.

Zur Reinigung von Rohgasen wendet man vor allem chemische und physikalische Absorptionsverfahren an. In beiden Fällen sind Absorption und Desorption zumeist reversible Vorgänge. Die ausgewaschenen Bestandteile der Gase werden bei der Regenerierung des Absorptionsmittels wieder abgegeben. Als Absorbenzien finden bei der chemischen Absorption u. a. wässrige Lösungen von Monoethanolamin, Diethanolamin und Triethanolamin, von Kaliumcarbonat, Natriumhydroxid oder Natriumthioarsenit Anwendung. Bei den physikalischen Absorptionsverfahren hat sich vor allem die Gasreinigung mit Methanol bei tiefen Temperaturen durchgesetzt. Andere Verfahren beruhen auf dem Einsatz von Propylencarbonat, N-Methylpyrrolidon oder einem Gemisch mehrerer Polyethylenglykol-dimethylather als Lösungsmittel. Schließlich wird auch chemische Absorption, bei der saure Gaskomponenten an basisch reagierende Waschmittel gebunden werden, mit physikalischer Absorption in organischen Lösungsmitteln kombiniert. Ein Beispiel hierfür ist die Wäsche mit einer Mischung aus Diisopropanolamin, Sulfolan (Tetrahydrothiophendioxid) und Wasser.

Sowohl chemische als auch physikalische Reinigungsverfahren stimmen darin überein, daß eine Feinreinigung, d. h. eine Reduzierung der Katalysatorgifte auf solche Konzentrationen, die für die individuellen Katalysatortypen nicht schädlich sind, mit wirtschaftlich vertretbarem Aufwand nicht mehr möglich ist.

Daher ist es häufig erforderlich, nach der ersten eine zweite Reinigungsstufe für das Rohgas vorzusehen. Besondere Beachtung wird dabei der Minderung des Schwefelgehaltes im Rohgas geschenkt. Abhängig von der Art der zu entfernenden Schwefelverbindungen verwendet man unterschiedliche Absorbenzien. So entfernt man nach dem in der DS-OS 2 650 711 beschriebenen Verfahren Schwefelwasserstoff mit Hilfe von Zinkoxid. Kohlenoxidsulfid wird nach der US-PS 4 009 009 aus arsenfreien Gasen mit Hilfe von Bleioxid, das auf Aluminiumoxid aufgetragen ist, abgetrennt. Zinkoxid findet auch zur Entfernung von Kohlenoxidsulfid (EP 00 37 157 A2) und Cyanwasserstoff (EP 00 37 158 A2) Anwendung. Eisenpentacarbonyl das ebenfalls in manchen Fällen als Katalysatorgift wirkt, läßt sich an Aktiv-Kohle absorbieren oder mit basischen Ionenaustauschern abtrennen (z. B. DE-AS 27 36 278).

Die bekannten Verfahren stellen nicht immer sicher, daß alle störenden Verunreinigungen entfernt werden oder erfordern zur Erreichung dieses Zieles einen hohen apparativen Aufwand.

Es bestand daher die Aufgabe, eine Arbeitsweise zur Herstellung reiner Gase zu entwickeln, die die geschilderten Nachteile vermeidet.

Diese Aufgabe wird gelöst durch ein Verfahren zur Reinigung von Gasen, die Schwefelwasserstoff und/oder Kohlenoxidsulfid und/oder Cyanwasserstoff als Verunreinigung enthalten. Es ist dadurch gekennzeichnet, daß die Gase bei 1-10 MPa und 30-100 °C in einer Extraktionskolonne im Gegenstrom mit gesättigten, geradkettigen oder verzweigten aliphatischen Aldehyden oder Gemischen solcher Aldehyde, die unter den Arbeitsbedingungen flüssig sind, behandelt werden.

Es war nicht vorauszusehen, daß die neue Arbeitsweise Gase sehr hoher Reinheit liefert.

Selbst äußerst wirksame Katalysetorgifte, wie Cyanwasserstoff, werden durch die erfindungsgemäße Gasbehandlung so weitgehend aus den Gasstrom entfernt, daß sie allenfalls noch als Spuren, die für den Katalysator unschädlich sind, nachgewiesen werden können.

Erfindungsgemäß werden zur Reinigung von Gasen mit Vorteil gesättigte, geradkettige oder verzweigte aliphatische Aldehyde mit 4 bis 10 Kohlenstoffatomen eingesetzt. Es ist nicht erforderlich, die reinen Aldehyde zu verwenden. Auch Gemische aus Aldehyden unterschiedlicher Molekülgröße oder Gemische isomerer Aldehyde sind zur Durchführung der beanspruchten Arbeitsweise geeignet. Mit besonderem Erfolg wird das bei der Hydroformylierung von Olefinen anfallende rohe, n- und Isoverbindungen enthaltende Aldehydgemisch eingesetzt.

Der beanspruchte Prozeß eignet sich zur Reinigung von Gasströmen, die gegenüber Aldehyden unter den einzuhaltenden Reaktionsbedingungen inert sind und die als Verunreinigungen Schwefelwasserstoff und/oder Cyanwasserstoff und/oder Kohlenoxidsulfid enthalten. Zu den Gasen und Gasgemischen, die erfindungsgemäß mit Aldehyden behandelt werden können, gehören gesättigte Kohlenwasserstoffe wie Erdgas, Kohlenmonoxid, Kohlendioxid, Wasserstoff. Besonders geeignet ist das Verfahren zur Entfernung von Verunreinigungen aus Synthesegas, d. h. dem Gemisch von Kohlenmonoxid und Wasserstoff. Hierbei ist es unerheblich, aus welchen Rohstoffen das Synthesegas gewonnen wurde. Sowohl das aus Erdöl als auch das aus Steinkohle oder Braunkohle erzeugte $CO/H_2$-Gemisch kann mit Aldehyden von den genannten Verunreinigungen befreit werden.

Die neue Arbeitsweise erlaubt es, Schwefelwasserstoff, Cyanwasserstoff und Kohlenoxidsulfid, die in Gasen oder Gasgemischen, in den von der Herstellung her üblichen Konzentrationen, d. h. in der Größenordnung von jeweils 100 Vol.-ppm enthalten sind, bis auf Spuren (d. h. Konzentrationen < 1 Vol.-ppm) aber auch unter die Nachweisgrenze zu entfernen. Je nach den Mengen der Verunreinigungen ist die Behandlung der Gase mit den Aldehyden gegebenenfalls in mehreren Stufen durchzuführen. Besonders bewährt hat sich das neue Verfahren zur Beseitigung der genannten Verunreinigungen, die in geringen Konzentrationen, d. h. von bis zu jeweils 10 Vol.-ppm, insbesondere von jeweils 5 bis 10 Vol.-ppm in dem gasförmigen Medium enthalten sind. In diesen Fällen muß der erfindungsgemäßen Arbeitsweise im allgemeinen ein erster Reinigungsschritt vorangehen, um den Hauptanteil der Verunreinigung zu entfernen. Für diesen ersten heinigungsschritt sind die weiter oben im Rahmen der Würdigung des Standes der Technik beschriebenen chemischen oder physikalischen Wäschen geeignet.

Das neue Reinigungsverfahren kann innerhalb weiter Temperatur- und Druckgrenzen durchgeführt werden. Die Reaktionsbedingungen sind so zu wählen, daß der zur Absorption eingesetzte Aldehyd flüssig ist. Bewährt haben sich Drücke von 1 bis 10 MPa, insbesondere von 1,5 bis 8 MPa und Temperaturen von 30 bis 100 °C, insbesondere von 50 bis 80 °C.

Der beanspruchte Prozeß wird in den für die Glasreinigung gebräuchlichen Reaktoren durchgeführt. Besonders geeignet sind Extraktionskolonnen, die mit Füllkörpern wie Ring- oder Sattelkörpern oder Stahlwendeln u. ä. gefüllt sind. Der Aldehyd wird am Kopf der Extraktionskolonne aufgegeben und rieselt dem vom Boden in die Kolonne einströmenden Gas entgegen. Die Gasphase verläßt die Kolonne oben, der Aldehyd unten.

Unabhängig von der Art des verwendeten Aldehyds setzt man je $m^3$ zu reinigendes Gas mindestens 0,5 l Aldehyd als Absorptionsmittel ein. Nach oben ist die Menge des eingesetzten Aldehyds unbegrenzt, sie wird lediglich durch wirtschaftliche Überlegungen beeinflußt. Vorteilhaft wendet man 1 bis 4 l und insbesondere 1 bis 2 l Aldehyd je $m^3$ Gase an.

Das neue Verfahren kann sowohl kontinuierlich als auch diskontinuierlich durchgeführt werden.

Zur Regenerierung wird der Aldehyd destilliert. Schwefelwasserstoff und Kohlenoxidsulfid entweichen über Kopf. Der Cyanidwasserstoff wird als Cyanhydrin gebunden und findet sich im Sumpf der Kolonne.

In den nachfolgenden Beispielen wird das Verfahren näher erläutert.

Beispiel 1

Am Kopf einer mit Raschig-Ringen gefüllten Extraktionskolonne von 290 mm Höhe und 63 mm Durchmesser werden unter einem Druck von 5,2 MPa und bei 35 °C 8 l/h eines Gemisches aus 95 Gew.-Teilen n- und 5 Gew.-Teilen i-Butyraldehyd zugeführt. Im Gegenstrom leitet man 5 $m^3$/h Synthesegas, das 1 $mg/m^3$ HCN, 0,8 $mg/m^3$ $H_2S$ und 1,5 $mg/m^3$ COS als Hauptverunreinigungen enthält, in die Kolonne. In dem die Kolonne am Kopf verlassenden Gas sind die genannten Verunreinigungen nicht mehr nachweisbar. Das Gas kann unmittelbar zur Hydroformylierung von Olefinen in Gegenwart von Rh-Katalysatoren eingesetzt werden. Bei Verwendung des erfindungsgemäß gereinigten Gases wird keine Beeinträchtigung der Katalysatorlebensdauer beobachtet. Dagegen läßt die Aktivität des Katalysators bei Einsatz von nicht nachgereinigtem Gas bereits nach kurzer Zeit nach.

Beispiel 2

In der Apparatur des Beispiels 1 werden unter einem Druck von 1,5 MPa und bei 40 °C 10 $m^3$/h Synthesegas mit einem Gehalt von 10 $mg/m^3$ HCN im Gegenstrom mit 5 l/h Isononanal behandelt. Im gereinigten Gas kann HCH nicht mehr nachgewiesen werden.

Patentansprüche

1. Verfahren zur Reinigung von Gasen, die Schwefelwasserstoff und/oder Kohlenoxidsulfit und/oder Cyanwasserstoff als Verunreinigung enthalten, dadurch gekennzeichnet, daß die Gase bei 1-10 MPa und 30-100 °C in einer Extraktionskolonne im Gegenstrom mit gesättigten, geradkettigen oder verzweigten aliphatischen Aldehyden oder Gemischen solcher Aldehyde, die unter den Arbeitsbedingungen flüssig sind, behandelt werden.

2. Verfahren nach Anspruch 1, dadurch gekennzeichnet, daß die zur Behandlung der Gase eingesetzten gesättigten, geradkettigen oder verzweigten Aldehyde 4 bis 10 Kohlenstoffatome aufweisen.

3. Verfahren nach Anspruch 1 und 2, dadurch gekennzeichnet, daß Aldehydgemische eingesetzt werden.

4. Verfahren nach Anspruch 1 bis 3, dadurch gekennzeichnet, daß die Behandlung der Gase bei 1,5 bis 8 MPa und 50 bis 80 °C erfolgt.

5. Verfahren nach Anspruch 1 bis 4, dadurch gekennzeichnet, daß je m³ zu reinigendes Gas mindestens 0,5 l Aldehyd eingesetzt werden.

6. Verfahren nach Anspruch 5, dadurch gekennzeichnet, daß je m³ zu reinigendes Gas 1 bis 4 l, vorzugsweise 1 bis 2 l Aldehyd eingesetzt werden.

## Claims

1. A process for cleaning gases containing hydrogen sulfide and/or carbon oxysulfide and/or hydrogen cyanide as impurities, characterised in that the gases are treated in counter-current in an extraction column at 1-10 MPa and 30-100 °C with saturated straight-chain or branched aliphatic aldehydes or mixtures of such aldehydes which are liquid under the operational conditions.

2. A process according to claim 1, characterised in that the saturated straight-chain or branched aldehydes used to treat the gases have 4 to 10 carbon atoms.

3. A process according to claims 1 and 2, characterised in that aldehyde mixtures are used.

4. A process according to claims 1 to 3, characterised in that the gases are treated at 1.5 to 8 MPa and 50 to 80 °C.

5. A process according to claims 1 to 4, characterised in that at least 0.5 l of aldehyde is used per cubic metre of gas to be cleaned.

6. A process according to claim 5, characterised in that 1 to 4 l and preferably 1 to 2 l of aldehyde is used per cubic metre of gas to be cleaned.

## Revendications

1. Procédé pour la purification de gaz qui contiennent comme impureté du sulfure d'hydrogène et/ou de l'oxysulfure de carbone et/ou du cyanure d'hydrogène, caractérisé en ce que les gaz sont traités à contre-courant dans une colonne d'extraction sous 1-10 MPa et à 30-100 °C, avec des aldéhydes aliphatiques saturés, à chaîne droite ou ramifiée, ou des mélanges de ces aldéhydes, qui sont liquides dans les conditions opératoires.

2. Procédé selon la revendication 1, caractérisé en ce que les aldéhydes saturés, à chaîne droite ou ramifiée, utilisés pour le traitement des gaz contiennent de 4 à 10 atomes de carbone.

3. Procédé selon les revendications 1 et 2, caractérisé en ce que l'on utilise des mélanges d'aldéhydes.

4. Procédé selon les revendications 1 à 3, caractérisé en ce que le traitement des gaz s'effectue sous 1,5 à 8 MPa et à 50-80 °C.

5. Procédé selon les revendications 1 à 4, caractérisé en ce que l'on utilise au moins 0,5 l d'aldéhyde par mètre cube de gaz à purifier.

6. Procédé selon la revendication 5, caractérisé en ce que l'on utilise 1 à 4 l d'aldéhyde, de préférence 1 à 2 l, par mètre cube de gaz à purifier.